# EUROPEAN PATENT APPLICATION

(11) **EP 4 378 810 A1**
(43) Date of publication of application: **05.06.2024**
(21) Application number: 23212188.9
(22) Date of filing: 27.11.2023
(51) Int. Cl.: B62J 7/04

(54) **REAR CARRIER**

(30) Priority: 29.11.2022 JP 2022190654
(71) Applicant: Suzuki Motor Corporation, Hamamatsu-shi, Shizuoka 432-8611 (JP)
(72) Inventor: KAMBAYASHI, Takahiro, Hamamatsu-shi, 432-8611 (JP)
(74) Representative: Haseltine Lake Kempner LLP

(57) **Abstract**

A rear carrier (30) protrudes rearward from a seat (21) of a straddle-type vehicle (1). The rear carrier (30) includes a carrier frame (31) fixed to a vehicle body frame (10) of the straddle-type vehicle (1), a cargo bed (41) supported from below by the carrier frame (31), and a hinge (46) connecting the carrier frame (31) and a front end of the cargo bed (41). The cargo bed (41) can be opened and closed around the hinge (46).

## Description

### Technical Field

The present invention relates to a rear carrier.

### Background Art

In some straddle-type vehicles such as scooters, a fuel tank is laid out inside a rear frame cover at a rear portion of the vehicle and a tank cap of the fuel tank is positioned behind a seat. As a rear carrier for such type of straddle-type vehicle, one that is installed behind the tank cap is known (see, for example, JPH2-158479A).

The rear carrier described in JPH2-158479A is fixed to a rear end of a rear frame (seat rail), and a tank cap is exposed upward from between a cargo bed of the rear carrier and a seat. Accordingly, it is possible to open the tank cap and easily refuel from a fuel filler port without unloading a cargo from the cargo bed of the rear carrier.

### Summary of Invention

However, in the rear carrier of JPH2-158479A, the cargo bed protrudes toward the rear of a vehicle, reducing a front wheel shared load and degrading steering stability. There are cases where the rear carrier is used not only to put a cargo on the cargo bed, but also to attach a top case. Here, when the top case is used as a backrest for a fellow passenger, there is a problem that the front wheel shared load is further reduced. A similar problem may occur in a rear carrier of an electric straddle-type vehicle in which a battery is installed inside a rear frame cover.

The present invention is made in such viewpoint, and an object of the present invention is to provide a rear carrier that can secure steering stability while improving workability in refueling and charging operations.

An aspect of the present invention that can solve the above problem is a rear carrier that protrudes rearward from a seat of a straddle-type vehicle, the rear carrier comprises a carrier frame fixed to a vehicle body frame of the straddle-type vehicle, a cargo bed supported from below by the carrier frame, and a hinge connecting the carrier frame and a front end of the cargo bed. In the rear carrier, the cargo bed can be opened and closed around the hinge.

According to the rear carrier of one aspect of the present invention, the cargo bed is opened and closed around the hinge, so even when the cargo bed is positioned above a tank cap of a fuel tank or a battery cap of a battery, refueling or charging operations will not be hindered. Therefore, the cargo bed can be brought closer to the seat, and the decrease in the front wheel shared load due to the loading of cargo on the cargo bed can be prevented, thereby improving steering stability. Even when a top case is attached to the cargo bed and the top case is used as a backrest for a fellow passenger, the reduction in the front wheel shared load is prevented. As such, it is possible to improve workability of refueling and charging operations while ensuring the steering stability.

### Brief Description of Drawings

Fig. 1 is a left side view of a vehicle rear portion of a straddle-type vehicle of a present example;
Fig. 2 is a top view of the vehicle rear portion of the straddle-type vehicle of the present example;
Fig. 3 is a top view of the vehicle rear portion of the straddle-type vehicle when a cargo bed of the present example is opened;
Figs. 4A and 4B are views illustrating a closed state of the cargo bed of the present example;
Figs. 5A and 5B are views illustrating an open state of the cargo bed of the present example; and
Figs. 6A and 6B are views illustrating an open/closed state of the cargo bed equipped with a top case of the present example.

### Description of Embodiments

A rear carrier according to an aspect of the present invention protrudes rearward from a seat of a straddle-type vehicle. A carrier frame of the rear carrier is fixed to a vehicle body frame of the straddle-type vehicle, a cargo bed is supported from below by the carrier frame, and a front end of the cargo bed is connected to the carrier frame via a hinge. Since the cargo bed can be opened and closed around the hinge, refueling work is not hindered even when the cargo bed is positioned above a tank cap of a fuel tank. Therefore, the cargo bed can be brought closer to the seat, and decrease in a front wheel shared load due to loading of a cargo on the cargo bed can be prevented, thereby improving steering stability. Even when a top case is attached to the cargo bed and the top case is used as a backrest for a fellow passenger, reduction in the front wheel shared load is prevented. As such, it is possible to improve workability of refueling and charging work while ensuring the steering stability.

### Example

Straddle-type vehicles such as scooters often include a fuel tank laid out at a rear portion of the vehicle and a fuel filler port located behind a seat. To install a rear carrier in such a straddle-type vehicle, it is necessary to ensure that a cargo bed of the rear carrier does not hinder refueling work. By positioning the cargo bed behind the fuel filler port, the workability of refueling work is improved, but a cargo and the like on the cargo bed reduces the front wheel shared load and reduces steering stability. A top case with a backrest is sometimes attached to the cargo bed, and when a fellow passenger leans against the top case, the front wheel shared load is further reduced.

Here, the cargo bed of the rear carrier may be positioned directly above the fuel filler port, and the cargo bed may be slid rearward only when refueling. When a top case with a backrest is attached to the cargo bed, safety must be ensured so that even when the passenger leans against the backrest without locking the backrest, the fellow passenger does not slip rearward. Thus, an interlock switch that stops an engine when the lock is forgotten is required, which complicates the structure. Therefore, in a rear carrier of a present example, a swing-type cargo bed is adopted considering workability in refueling work, steering stability, and safety of a fellow passenger.

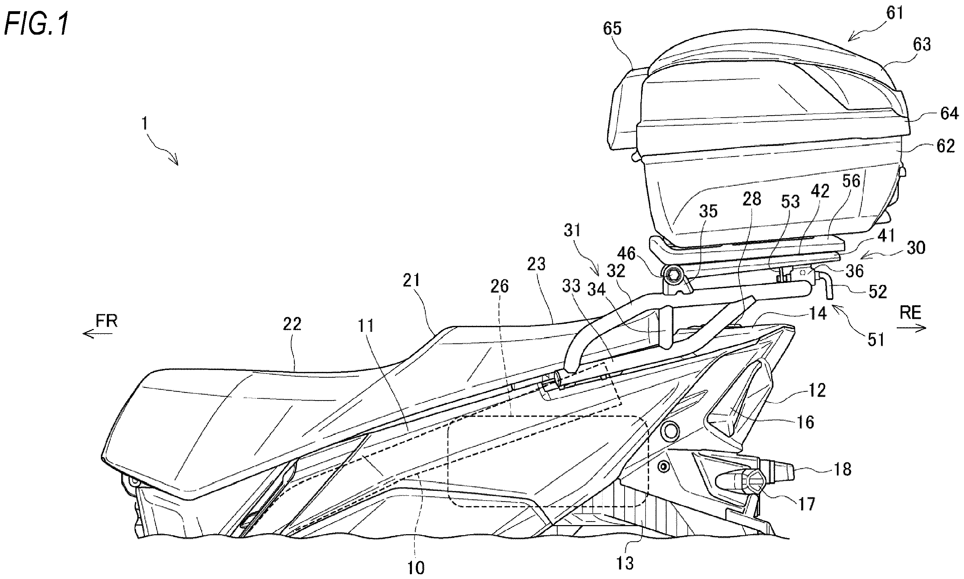

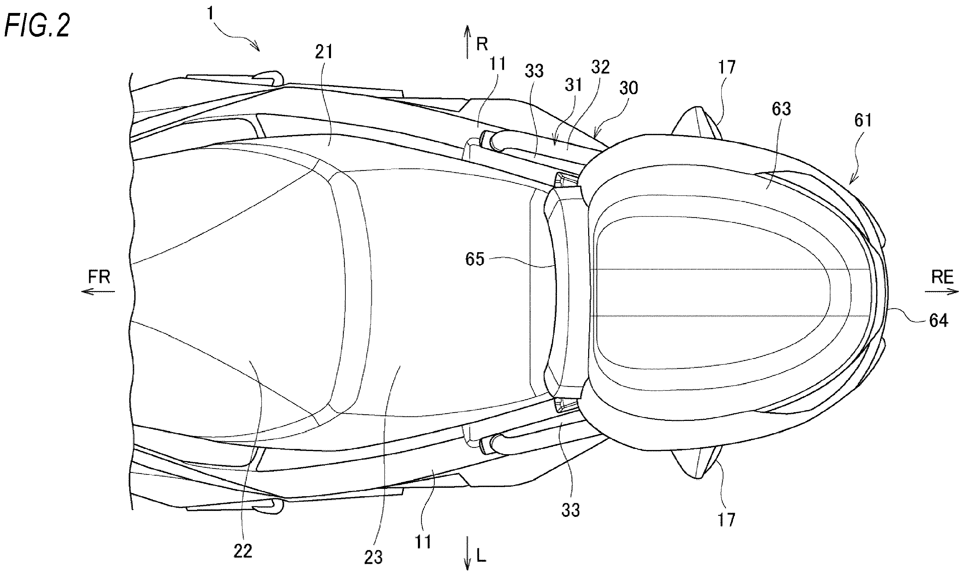

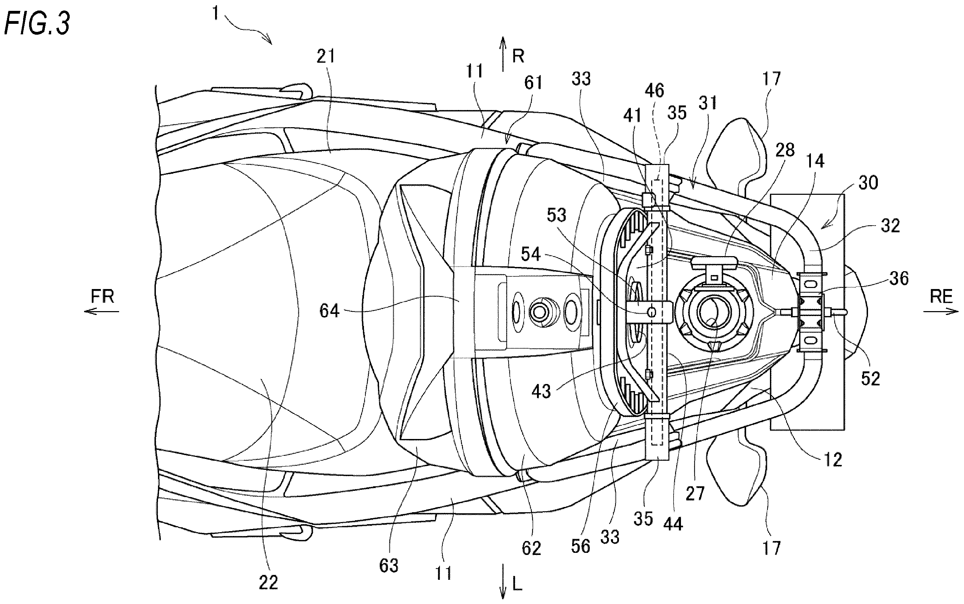

A straddle-type vehicle on which a rear carrier of the present example is mounted will be described below with reference to the accompanying drawings. Fig. 1 is a left side view of a vehicle rear portion of the straddle-type vehicle of the present example. Fig. 2 is a top view of the vehicle rear portion of the straddle-type vehicle of the present example. Fig. 3 is a top view of the vehicle rear portion of the straddle-type vehicle when a cargo bed of the present example is opened. In the following figures, an arrow FR indicates the front of the vehicle, an arrow RE indicates the rear of the vehicle, an arrow L indicates the left of the vehicle, and an arrow R indicates the right of the vehicle.

As illustrated in Fig. 1, a vehicle rear portion of a straddle-type vehicle 1 is provided with a plurality of covers as vehicle body exteriors to cover a pair of left and right rear frames (vehicle body frames) 10. The pair of left and right rear frames 10 are covered from left and right sides by a pair of left and right rear frame covers 11, covered from behind by a rear center cover 12, and covered from below by a rear fender 13. The pair of left and right rear frames 10 are covered from above by a rear upper cover 14 and a seat 21. The upper, lower, left, right, and rear cover members and the seat 21 form the vehicle body exterior of the vehicle rear portion of the straddle-type vehicle 1.

The seat 21 has a seating surface 22 for a driver and a seating surface 23 for a fellow passenger arranged in a front-rear direction, and the seating surface 23 for the fellow passenger is positioned above the seating surface 22 for the driver. A fuel tank 26 is accommodated inside the pair of left and right rear frame covers 11, and a fuel filler port 27 (see Fig. 3 ) is formed in the rear upper cover 14 behind the seat 21. A tank cap 28 is attached to the fuel filler port 27, and the tank cap 28 is opened upward by a mechanical key, a smart key, or the like. A pair of brake lamps 16, a pair of turn signal lamps 17, and a license lamp 18 are provided on the rear center cover 12.

As illustrated in Figs. 1 to 3, a rear carrier 30 protrudes rearward from the seat 21, and a top case 61 is attached to the rear carrier 30. A carrier frame 31 of the rear carrier 30 is fixed to the rear frame 10 to surround the pair of left and right rear frame covers 11 and the rear center cover 12 from the outside. A cargo bed 41 of the rear carrier 30 is formed in a plate shape, and the carrier frame 31 supports the cargo bed 41 from below. A connecting pipe 44 (see Fig. 3) is provided at a front end portion of the cargo bed 41, and the carrier frame 31 and a front end portion of the cargo bed 41 are connected via a hinge 46 inserted into the connecting pipe 44.

More specifically, the carrier frame 31 includes an upper frame 32 that is U-shaped when viewed from above, a pair of left and right lower frames 33 that support both left and right sides of the upper frame 32 from below, and a pair of left and right bridges 34 that reinforce the upper frame 32 and the lower frames 33. A pair of pivot brackets 35 are provided on upper surfaces of both left and right sides of the upper frame 32, and the hinge 46 extending in the left-right direction is supported by the pair of pivot brackets 35. The hinge 46 is inserted into the connecting pipe 44 of the cargo bed 41, and the cargo bed 41 can be opened and closed between an open position where the cargo bed 41 stands up around the hinge 46 and a closed position where the cargo bed 41 falls down.

A support bracket 36 is provided on an upper surface of a rear side of the upper frame 32, and the support bracket 36 supports a rear end, which is a free end of the cargo bed 41. The cargo bed 41 is formed so that a width thereof narrows from the front to the rear, and an opening 43 having an elliptical shape is formed in a center of the cargo bed 41. An outer edge and an opening edge of the cargo bed 41 are bent downward, and the strength of the cargo bed 41 is increased by the bent portions. The tank cap 28 is covered from above by the cargo bed 41, and a space above the tank cap 28 is effectively used as an installation space for a cargo or the top case 61.

The support bracket 36 supports a lock pin 52 having an L shape in a side view, and a tip of the lock pin 52 is directed forward. A lock piece 53 is provided on a rear surface of the cargo bed 41, and the lock piece 53 faces the support bracket 36 when the cargo bed 41 is closed. A lock hole 54 is formed in the lock piece 53, and the cargo bed 41 is locked by inserting the lock pin 52 into the lock hole 54. As such, a lock mechanism 51 for restricting an opening operation of the cargo bed 41 is formed by the lock pin 52 of the support bracket 36 provided on the carrier frame 31 and the lock hole 54 of the lock piece 53 provided on the cargo bed 41.

The top case 61 is detachably attached to a mounting surface 42 of the cargo bed 41 via a fixing bracket 56. An upper surface of a case body 62 of the top case 61 is open, and a case cover 63 is connected to a front edge of the case body 62 via a hinge (not illustrated) so that the case cover 63 can be opened and closed. A cargo accommodation space is formed by the case body 62 and the case cover 63. The case cover 63 is provided with a latch mechanism 64 that fixes the case cover 63 to the case body 62 when the case cover 63 is closed. A backrest 65 for a fellow passenger is provided on a front surface of the case cover 63 with a cushion material or the like.

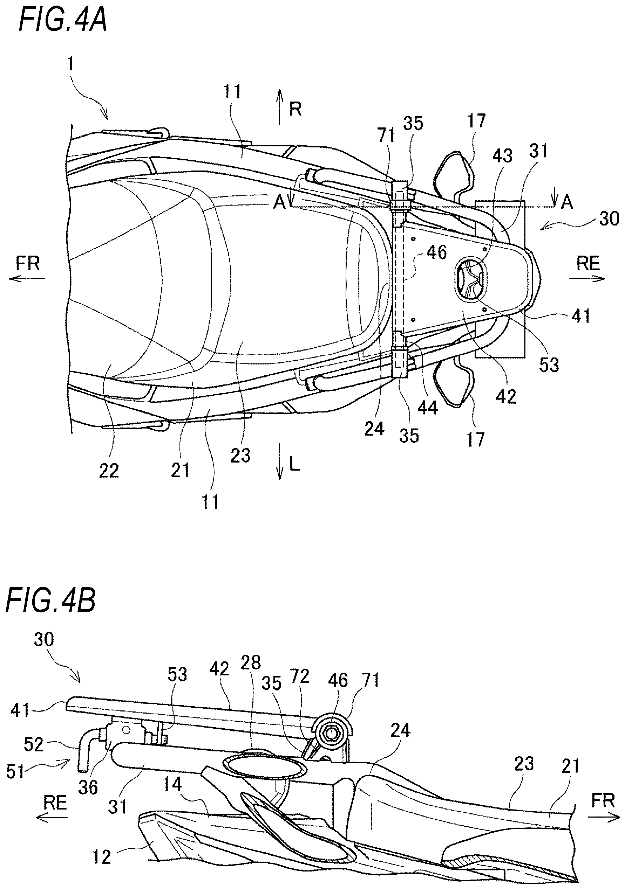

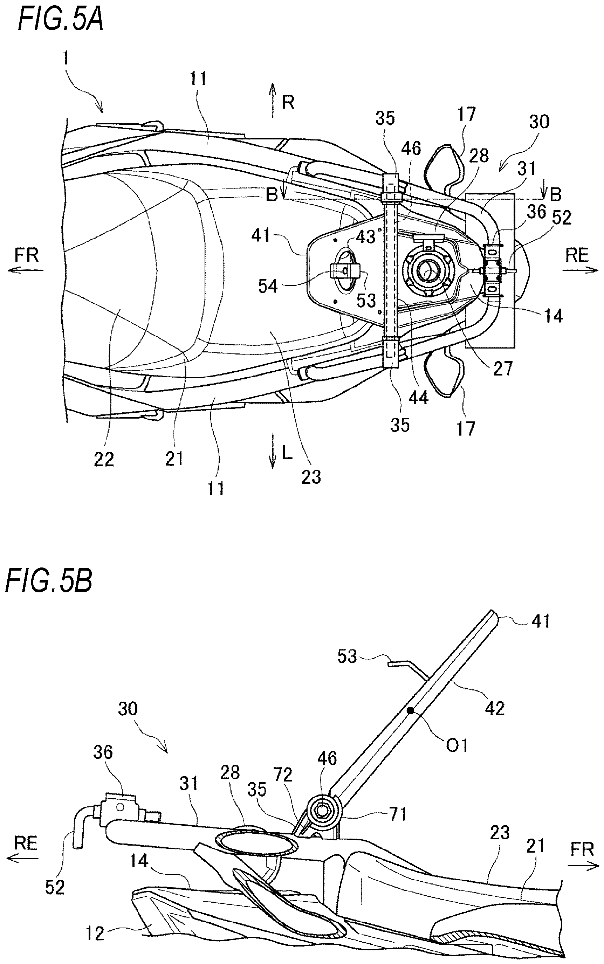

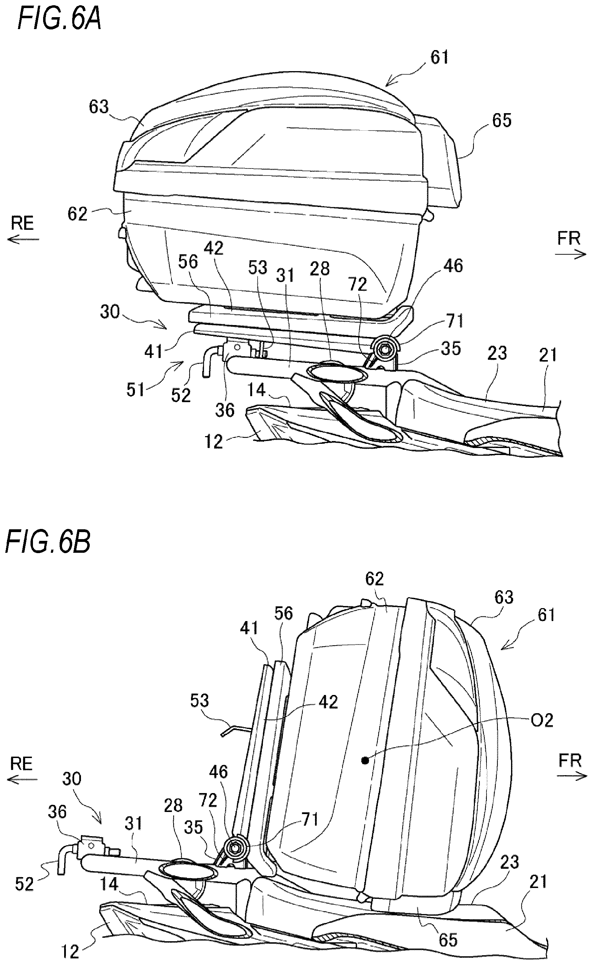

An open/closed state of the cargo bed will be described with reference to Figs. 4A to 6B. Figs. 4A and 4B are views illustrating a closed state of the cargo bed of the present example, where Fig. 4Ais a top view of the cargo bed, and Fig. 4B is a sectional view of the cargo bed of Fig. 4A taken along the line A-A. Figs. 5A and 5B are views illustrating an open state of the cargo bed of the present example, where Fig. 5Ais a top view of the cargo bed, and Fig. 5B is a sectional view of the cargo bed of Fig. 5A taken along the line B-B. Figs. 6A and 6B are views illustrating an open/closed state of the cargo bed equipped with the top case of the present example, where Fig. 6A illustrates a state in which the cargo bed is closed, and Fig. 6B illustrates a state in which the cargo bed is opened.

As illustrated in Figs. 4A and 4B, the cargo bed 41 is positioned behind the seat 21 when the cargo bed 41 is closed. Since the cargo bed 41 does not overlap the seat 21 when viewed from above, the seating surfaces 22 and 23 of the seat 21 are secured widely. The seating surface 23 for the fellow passenger is higher than the seating surface 22 for the driver on the seat 21, and a rear end 24 of the seating surface 23 for the fellow passenger is the highest in the seat 21. The hinge 46 is positioned above the rear end 24 of the seating surface 23, and the mounting surface 42 of the cargo bed 41 is positioned above the rear end 24 of the seating surface 23 when the cargo bed 41 is closed. Even when a cargo is placed on the cargo bed 41, the cargo bed 41 can be opened without the cargo being caught by the seat 21.

As described above, the cargo bed 41 is formed in a plate shape, and the tank cap 28 is positioned below the cargo bed 41. Since the tank cap 28 is covered from above by the cargo bed 41, it is difficult for foreign matter such as dust and water droplets to adhere to the tank cap 28. The tank cap 28 is attached to the rear upper cover 14 so that the tank cap 28 can be opened upward, and when the tank cap 28 stands up, the fuel filler port 27 (see Fig. 3) opens upward. When the cargo bed 41 is closed, the cargo bed 41 is separated from the tank cap 28 in a standing posture. Therefore, even when the cargo bed 41 accidentally falls down while the tank cap 28 stands up, the cargo bed 41 does not collide with the tank cap 28.

The connecting pipe 44 is provided at a front end of the cargo bed 41, and a semicircular plate 71 is provided at one end (right end) of the connecting pipe 44. The semicircular plate 71 rotates as the cargo bed 41 opens and closes, and the semicircular plate 71 faces upward when the cargo bed 41 is closed. A pair of pivot brackets 35 are provided on an upper surface of the carrier frame 31, and a stopper 72 having a plate shape protrudes inward in a vehicle width direction from the pivot bracket 35 on one end side (right end side). The stopper 72 is provided below the semicircular plate 71 when the cargo bed 41 is closed, and the stopper 72 is located forward of the semicircular plate 71 in a rotational direction.

Since the cargo bed 41 is brought closer to the seat 21 in the rear carrier 30 of the present example, even when the cargo is loaded on the cargo bed 41, a front wheel shared load can be prevented from significantly decreasing, so steering stability is not degraded. The rear carrier 30 is provided with the lock mechanism 51, which locks the cargo bed 41 in a closed state, thereby preventing the cargo bed 41 from opening by itself during travel. There is a risk that the driver may forget to lock the cargo bed 41 due to carelessness, but when the vehicle travels without locking the cargo bed 41, the cargo bed 41 will vibrate with the hinge 46 as a fulcrum. Therefore, vibration sound of the cargo bed 41 can remind the driver of forgetting to lock.

As illustrated in Figs. 5A and 5B, when the cargo bed 41 is opened, the tank cap 28 of the rear upper cover 14 is exposed upward. Here, the semicircular plate 71 that moves integrally with the cargo bed 41 abuts against the stopper 72, and the cargo bed 41 is maintained at a maximum open position in which the cargo bed 41 stands obliquely forward and upward. Since a center of gravity 01 of the cargo bed 41 is positioned forward of the hinge 46, the cargo bed 41 does not fall backward from the maximum open position due to its own weight. Thus, even when an upper part of the tank cap 28 is covered with the cargo bed 41, by opening the cargo bed 41 and exposing the tank cap 28, workability of refueling the fuel tank 26 (see Fig. 1) is improved.

As illustrated in Fig. 6A, the top case 61 is attached to the cargo bed 41 via the fixing bracket 56 while the cargo bed 41 is closed. Since the top case 61 is located close to the seat 21, even when a fellow passenger leans against the backrest 65 of the top case 61, a large decrease in the front wheel shared load is prevented. As a result, the steering stability is not lowered. Even when the fellow passenger leans against the backrest 65 while forgetting to lock the cargo bed 41, the cargo bed 41 is simply pressed down by the fellow passenger's back. Since the fellow passenger does not slip backward, there is no need to install an interlock switch or the like to ensure safety.

As illustrated in Fig. 6B, when the cargo bed 41 is opened, the tank cap 28 of the rear upper cover 14 is exposed upward. Here, the backrest 65 of the top case 61 abuts against the seat 21 and the cargo bed 41 is maintained in a standing state. A center of gravity O2 of the cargo bed 41 and the top case 61 is located forward of the hinge 46, so that the cargo bed 41 and the top case 61 do not fall backward due to their own weight. Since the semicircular plate 71 and the stopper 72 are not in contact with each other, no strong load acts on the stopper 72. Thus, it is possible to refuel the fuel tank 26 (see Fig. 1) while the top case 61 is attached to the cargo bed 41.

As described above, according to the rear carrier 30 of the present example, since the cargo bed 41 is opened and closed around the hinge 46, even when the cargo bed 41 is positioned above the tank cap 28 of the fuel tank 26, refueling work is not hindered. Therefore, the cargo bed 41 can be brought closer to the seat 21, and the decrease in the front wheel shared load due to the loading of cargo on the cargo bed 41 can be prevented, thereby improving the steering stability. Even when the top case 61 is attached to the cargo bed 41 and the top case 61 is used as a backrest for a fellow passenger, the reduction in the front wheel shared load is prevented. As such, it is possible to improve the workability of the refueling work while ensuring the steering stability.

The rear carrier of the present example may be installed in an electric vehicle. A scooter-type electric vehicle has a widest space below the seat, and a battery is often installed in the space below the seat. Not only a charging cable but also a communication cable extends from the battery, so it is desired to bring a charging port closer to the battery to reduce cable costs, but the space under the seat is also used for accommodation. Therefore, it is desirable to install the charging port behind the seat. By using the rear carrier of the present example, even when the charging port is installed behind the seat, it is possible to improve the workability of a charging operation without increasing the cost while ensuring steering stability.

In the present example, when there is no cargo on the cargo bed, the circular plate abuts against the stopper to restrict the opening of the cargo bed. However, when there is no cargo on the cargo bed, the mounting surface of the cargo bed may abut against the seating surface of the seat to restrict the opening of the cargo bed. Here, the circular plate and the stopper are not required, and the rear carrier can have a simple structure.

Although the cargo bed is formed in a plate shape in the present example, the cargo bed may be formed in a mesh plate shape.

In the present example, the lock mechanism is formed by the lock piece provided on the cargo bed and the lock pin provided on the carrier frame. However, the lock mechanism may be provided on the cargo bed and carrier frame to restrict the opening operation of the cargo bed.

In the present example, the cargo bed is positioned behind the seat, but the rear carrier only needs to protrude rearward from the seat, and a part of the cargo bed may overlap the seat when viewed from above.

In the present example, the mounting surface of the cargo bed is located above the rear end of the seating surface of the seat. However, as long as the cargo bed can be opened and closed around the hinge, a positional relationship between the mounting surface of the cargo bed and the seating surface of the seat is not particularly limited.

The rear carrier of the present example is not limited to the straddle-type vehicle described above, and may be employed in other types of straddle-type vehicles. The straddle-type vehicle is not limited to vehicles in general in which the driver rides in a posture straddling the seat, but also includes scooter-type vehicles in which the driver rides without straddling the seat.

As described above, a first aspect is a rear carrier (30) that protrudes rearward from a seat (21) of a straddle-type vehicle (1), the rear carrier including a carrier frame (31) fixed to a vehicle body frame (rear frame 10) of the straddle-type vehicle, a cargo bed (41) supported from below by the carrier frame, and a hinge (46) connecting the carrier frame and a front end of the cargo bed, where the cargo bed can be opened and closed around the hinge. According to such configuration, the cargo bed is opened and closed around the hinge, so even when the cargo bed is positioned above the tank cap of the fuel tank or the battery cap of the battery, refueling and charging operations will not be hindered. Therefore, the cargo bed can be brought closer to the seat, and the decrease in the front wheel shared load due to the loading of cargo on the cargo bed can be prevented, thereby improving the steering stability. Even when a top case is attached to the cargo bed and the top case is used as a backrest for the fellow passenger, the reduction in the front wheel shared load is prevented. As such, it is possible to improve the workability of refueling and charging operations while ensuring the steering stability.

According to a second aspect, in the first aspect, the cargo bed covers a tank cap (28) of a fuel tank (26) or a battery cap of a battery of the straddle-type vehicle from above. According to such configuration, a space above the tank cap and the battery cap can be effectively utilized.

According to a third aspect, in the first or second aspect, the carrier frame and the cargo bed are provided with a lock mechanism (51) for restricting an opening operation of the cargo bed. According to such configuration, locking the cargo bed prevents the cargo bed from opening by itself during traveling or the like. When the vehicle travels without locking the cargo bed, the cargo bed vibrates with the hinge as a fulcrum, so vibration sound of the cargo bed can remind a driver of forgetting to lock.

According to a fourth aspect, in any one of the first to third aspects, when the cargo bed is closed, a mounting surface (42) of the cargo bed is positioned above a seating surface (23) of the seat. According to such configuration, even when a cargo is placed on the cargo bed, the cargo bed can be opened without the cargo being caught by the seat.

According to a fifth aspect, in any one of the first to fourth aspects, when the cargo bed is closed, the cargo bed is separated from the tank cap in a standing posture with a fuel filler port (27) open. According to such configuration, even when the cargo bed accidentally falls down while the tank cap stands up, the cargo bed does not collide with the tank cap.

According to a sixth aspect, in any one of the first to fifth aspects, when the cargo bed is closed, the cargo bed is positioned behind the seat. According to such configuration, the cargo bed does not overlap the seat, so a wide seating surface can be secured.

According to a seventh aspect, in any one of the first to sixth aspects, the hinge is positioned above the seating surface of the seat. According to such configuration, even when cargo is placed on the cargo bed, the cargo bed can be opened without the cargo being caught by the seat.

According to an eighth aspect, in any one of the first to seventh aspects, the cargo bed is formed in a plate shape. According to such configuration, the tank cap and the battery cap are covered with the cargo bed having a plate shape, so foreign matter such as dust and water droplets are less likely to adhere to the tank cap and the battery cap.

Although the present example is described, another example may be a combination of the above-described example and a modification example in whole or in part.

The technology of the present invention is not limited to the above-described example, and may be variously changed, replaced, and modified without departing from the spirit of the technical idea. When the technical idea can be realized in another way by advancement of technology or another derived technology, the method may be used for implementation. Therefore, the claims cover all implementations that may fall within the scope of the technical idea.

## Claims

1. A rear carrier (30) that protrudes rearward from a seat (21) of a straddle-type vehicle (1), the rear carrier (30) comprising:
a carrier frame (31) fixed to a vehicle body frame (10) of the straddle-type vehicle (1);
a cargo bed (41) supported from below by the carrier frame (31); and
a hinge (46) connecting the carrier frame (31) and a front end of the cargo bed (41), wherein
the cargo bed (41) can be opened and closed around the hinge (46).

2. The rear carrier (30) according to claim 1, wherein the cargo bed (41) covers a tank cap (28) of a fuel tank (26) or a battery cap of a battery of the straddle-type vehicle (1) from above.

3. The rear carrier (30) according to claim 1 or 2, wherein the carrier frame (31) and the cargo bed (41) are provided with a lock mechanism (51) for restricting an opening operation of the cargo bed (41).

4. The rear carrier (30) according to claim 1 or 2, wherein when the cargo bed (41) is closed, a mounting surface (42) of the cargo bed (41) is positioned above a seating surface (23) of the seat (21).

5. The rear carrier (30) according to claim 1 or 2, wherein when the cargo bed (41) is closed, the cargo bed (41) is separated from the tank cap (28) in a standing posture with a fuel filler port (27) open.

6. The rear carrier (30) according to claim 1 or 2, wherein when the cargo bed (41) is closed, the cargo bed (41) is positioned behind the seat (21).

7. The rear carrier (30) according to claim 1 or 2, wherein the hinge (46) is positioned above the seating surface (23) of the seat (21).

8. The rear carrier (30) according to claim 1 or 2, wherein the cargo bed (41) is formed in a plate shape.
